# EUROPÄISCHE PATENTSCHRIFT

(11) **EP 1 042 218 B1**
(45) Veröffentlichungstag und Bekanntmachung des Hinweises auf die Patenterteilung: **07.03.2012**
(21) Anmeldenummer: 98966570.8
(22) Anmeldetag: 22.12.1998
(51) Int. Cl.: C01B 6/24

(54) **VERFAHREN ZUR HERSTELLUNG NANOKRISTALLINER METALLHYDRIDE**
PROCESS FOR PREPARING NANOCRYSTALLINE METAL HYDRIDES
PROCEDE POUR LA PRODUCTION D'HYDRURES METALLIQUES NANOCRISTALLINS

(30) Priorität: 23.12.1997 DE 19758384
(43) Veröffentlichungstag der Anmeldung: 11.10.2000
(73) Patentinhaber: Helmholtz-Zentrum Geesthacht Zentrum für Material- und Küstenforschung GmbH, 21502 Geesthacht (DE); GfE Metalle und Materialien GmbH, 90431 Nürnberg (DE); HYDRO-QUEBEC, Varennes, Quebec J3X 1S1 (CA)
(72) Erfinder: KLASSEN, Thomas, D-21033 Hamburg (DE); OELERICH, Wolfgang, D-21502 Geesthacht (DE); BORMANN, Rüdiger, D-22301 Hamburg (DE); GÜTHER, Volker, D-90559 Burgthann (DE); SCHULZ, Robert, Sainte-Julie, Quebec J0L 2S0 (CA); HUOT, Jacques, Sainte-Julie, Quebec J0L 2S0 (CA)
(74) Vertreter: UEXKÜLL & STOLBERG
(86) Internationale Anmeldenummer: PCT/DE1998/003765
(87) Internationale Veröffentlichungsnummer: WO 1999/033747

(56) Entgegenhaltungen:
- EP-A- 0 671 357
- CA-A- 654 035
- CHEMICAL ABSTRACTS, vol. 119, no. 22, 29. November 1993 Columbus, Ohio, US; abstract no. 240428, DYMOVA ET AL.: "Solid-phase reaction of crystaline aluminium trihydride. Formation of alkali metal tetra- and hexahydroaluminates" XP002089013 & KOORDIN. KHIM, Bd. 19, Nr. 7, 1993, Seiten 529-534, Russia
- CLAUDY ET AL: "Reactions of lithium and sodium aluminum hydride with sodium or lithium hydride. Preparation of a new alumino-hydride of lithium and sodium (LiNa2AlH6)" MATERIALS RESEARCH BULLETIN, Bd. 17, Nr. 12, 1. Januar 1982, Seiten 1499-1504, XP002089012

## Beschreibung

Die Erfindung betrifft ein Verfahren zur Herstellung nanokristalliner Metallhydride.

Es ist bekannt, daß auf der Basis von reversiblen Metallhydriden Wasserstoff-Speicher, sogenannte Hydridspeicher, gebildet werden können. Hierbei wird durch Wärmeabgabe der Speicher geladen, d.h. Wasserstoff wird durch Chemisorption gebunden und durch Wärmezufuhr wieder entladen. Wasserstoff-Speicher könnten somit hervorragenden Energiespeicher für mobile und/oder stationäre Anwendungen bilden, d.h. diese würden, da bei der Entladung der Wasserstoff-Speicher keine schädlichen Emissionen frei werden, in Zukunft ein beachtliches Speicherpotential bilden.

Gut geeignet für derartige Hydridspeicher sind sogenannte nanokristalline Hydride, die sich durch eine schnelle Wasserstoffaufnahme- und -abgabekinetik auszeichnen. Allerdings ist ihre Herstellung bislang sehr aufwendig. Bisher wurden dazu zunächst durch Hochenergiemahlen aus elementaren Komponenten oder Vorlegierungen nanokristalline Legierungen hergestellt, wobei die Mahldauern sehr lang sein können. In einem anschließenden Prozeßschritt wurden diese nanokristallinen Legierungen einer u.U. mehrstufigen Wärmebehandlung unter hohem Wasserstoffdruck unterzogen und auf diese Weise hydriert. Für viele Legierungen ist darüber hinaus eine mehrfache Be- und Entladung mit Wasserstoff notwendig, um die volle Kapazität zu erreichen.

Alternativ wurde versucht, die entsprechenden Hydride durch Mahlen unter Wasserstoffatmosphäre oder auf rein chemischem Wege zu synthetisieren. Dabei zeigte sich allerdings, daß die Ausbeute an den gewünschten Hydriden geringer ist und zum Teil zusätzliche unerwünschte Phasen auftreten.

T. N. Dymove et al, Coordination Chemistry, 1993, vol 19, no. 7, Seiten 529-534 offenbart die Herstellung von Hydriden von Aluminium und Alkalimetall, durch mechanische Mahlung von Aluminiumhydrid und Alkalimetallhydrid. Die Mahlung findet statt unter Argonatmosphäre.

Weiterhin sind bestimmte Phasen mit diesen konventionellen Methoden überhaupt nicht darstellbar.

Es ist somit Aufgabe der vorliegenden Erfindung, ein Verfahren der eingangs genannten Art zu schaffen, mit dem eine Herstellung von stabilen und metastabilen Hydriden oder Hydriden metastabiler Legierungen erreicht werden kann, und zwar mit einer sehr hohen Ausbeute bis in den Bereich von 100 %, wobei das Verfahren unter verhältnismäßig einfach beherrschbaren Randbedingungen durchführbar sein soll und mit verhältnismäßig geringer Energiezufuhr betrieben werden kann.

Gelöst wird die Aufgabe gemäß der Erfindung dadurch, daß ein elementares Metallhydrid einer ersten Art mit wenigstens einem elementaren Metall zur Schaffung eines Legierungshydrids einem mechanischen Mahlvorgang unterworfen werden.

Der Vorteil der erfindungsgemäßen Lösung besteht im wesentlichen darin, daß, wie angestrebt, mit einer hohen Ausbeute bis in den Bereich von 100 % eine Herstellung von stabilen und metastabilen Hydriden oder Hydriden metastabiler Legierungen auf verhältnismäßig einfache Weise möglich ist und die Nachteile, die bei den im Stand der Technik bekannten Verfahren zur Herstellung von Hydrid-Speichern auftreten, vermieden werden, wobei mit dem erfindungsgemäßen Verfahren zudem auch Hydride hergestellt werden können, die mittels der bekannten Verfahren überhaupt nicht herstellbar sind.

Je nach den verwendeten Hydriden zur Herstellung nanokristalliner Metallhydride wird der Mahlvorgang des Gemisches aus elementarem Metallhydrid, Metall und eventuell mehreren weiteren Metallhydriden vorzugsweise eine vorbestimmte Zeit lang durchgeführt werden, wobei vorzugsweise der Mahlvorgang im Bereich von 20 bis 200 Stunden liegt.

Grundsätzlich ist aber das Zeitintervall des Mahlvorgangs von der Bauart der verwendeten Mahleinrichtung abhängig, so daß die angegebenen, vorzugsweisen Mahldauern unter oder überschritten werden können. Allgemein kann aber gesagt werden, daß die erfindungsgemäßen Mahldauern deutlich kürzer als die beim Mahlen ohne Einsatz von Hydriden sind.

Der Mahlvorgang findet unter einer Inertgasatmosphäre statt. Wie oben schon erwähnt, wurden bisher Hydride, beispielsweise Magnesium-Eisen-Hydrid, durch Sinterung bei hoher Temperatur und unter hohem Wasserstoffdruck hergestellt. Man hatte versucht, um bei diesem Beispiel zu bleiben, Magnesium und Eisen in einer Wasserstoffatmosphäre zu mahlen, dieses führte jedoch nicht zu einer Synthetisierung des gewünschten Magnesium-Eisen-Hydrids. Durch Mahlen von Magnesiumhydrid und Eisen in einem bestimmten Molverhältnis unter Inertgasatmosphäre ist es jedoch erfindungsgemäß möglich, am Ende des Mahlvorganges ein wasserstoffangereichertes Hydrid direkt zu synthetisieren, was insbesondere bei Verwendung von Argon als Inertgas sehr gute Erfolge gezeigt hat.

Besonders gute Ergebnisse wurden mit dem Verfahren vorzugsweise dadurch realisiert, daß das erste elementare Metallhydrid aus Metallen der I. oder II. Hauptgruppe des Periodensystems der Elemente besteht. Die Metalle sind vorzugsweise Li, Na, K, Mg, Ca, Sc, Y, Ti, V, Ny oder La, wobei die Elemente vorzugsweise Fe, Co, Nb, Cu, Zn, Al und Si sind. Besonders gute Verfahrensergebnisse wurden ebenfalls dadurch erreicht, daß vorzugsweise das elementare Metall aus Elementen der VIII. Nebengruppe des Periodensystems der Elemente besteht.

Die Metallhydride und/oder das Metall werden vorher in eine pulverförmige Form zu überführt und dann werden die pulverförmigen Metallhydride und/oder das Metall dem erfindungsgemäßen Mahlvorgang zu unterworfen. So ist das Verfahren effektiv betreibbar und infolgedessen mit einer extrem hohen Ausbeute betreibbar.

Die Erfindung wird nun unter Bezugnahme auf die nachfolgenden schematischen Darstellungen anhand mehrerer Beispiele im einzelnen beschrieben. Darin zeigen:
- Fig. 1: die Röntgenstrahlbeugung des Mg₂FeH₆-Pulvers,
- Fig. 2: eine Bestätigung des Ergebnisses des Beispiels 1 durch Überprüfung mit einem Differential-Scanning-Kalorimeter DSC unter Wasserstoff,
- Fig. 3: die Röntgenstrahlbeugung des Na₃AlH₆-Pulvers,
- Fig. 4: eine Bestätigung des Ergebnisses des Beispiels von Fig. 3 durch Überprüfung mit einem Differential-Scanning-Kalorimeter DSC unter Wasserstoff,
- Fig. 5: die Röntgenstrahlbeugung des Na2AlLiH₆-Pulvers,
- Fig. 6: die Röntgenstrahlbeugung des (MgH₂)₆₇Ni₃₃-Pulvergemisches nach unterschiedlichen Mahlzeiten,
- Fig. 7: die Röntgenstrahlbeugung des Mg₂NiH₄/MgH₂-Pulvergemisches nach unterschiedlichen Mahlzeiten,
- Fig. 8: das PCT-Diagramm des Mg₂NiH₄/MgH₂-Zweiphasen-Kompositpulvers
- Fig. 9: die Röntgenstrahlbeugung des (Mg-10 mol % MgH₂)₆₇Ni₃₃-Pulvergemisches bei unterschiedlichen Mahlzeiten und
- Fig. 10: der Vergleich der Wasserstoffabsorptionskinetik bei 300°C für Mg₂Ni, berechnet mit unterschiedlichen Werten von MgH₂.

Es ist bekannt, daß Magnesium und Eisen nicht mischbar sind. Der gewöhnliche Weg zur Herstellung von Hydriden war beispielsweise die Wärmebehandlung der Bestandteile, die zum gewünschten Hydrid führen sollen, und zwar bei sehr hoher Temperatur und bei hohem Wasserstoffgasdruck. Frühere Versuche ergaben, daß grundsätzlich das Mahlen von Magnesium und Eisen unter Wasserstoffatmosphäre nicht zu einer Synthetisierung beispielsweise eines Hydrids in Form von Mg₂FeH₆ führte. Diese Versuche hatten aber ergeben, daß das Mahlen der Bestandteile grundsätzlich eine Absenkung der Wärmebehandlungstemperatur und des Wasserstoffdrucks ermöglichte.

Beim erfindungsgemäßen Verfahren werden elementare Hydride und elementares Metall der Elemente der VIII. Nebengruppe des Periodensystems der Elemente, beispielsweise MgH₂ und Fe, unter Argonatmosphäre gemahlen. Erfindungsgemäß wurde gefunden, daß es am Ende des Mahlvorganges möglich war, das entstandene Hydrid Mg₂FeH₆ ohne nachfolgendes Sintern direkt zu synthetisieren.

### Beispiel 1:

### Synthetisierung von Mg₂FeH₆

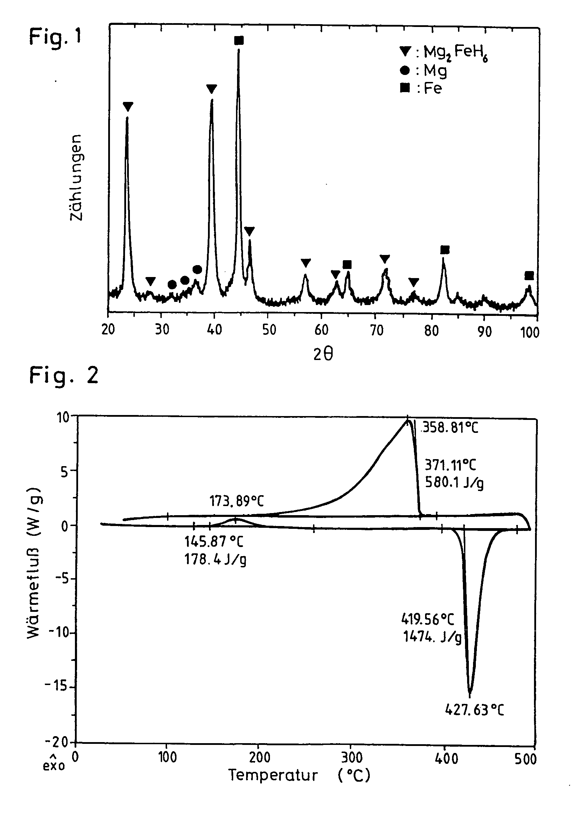

Experimentelle Einzelheiten: 3 g von MgH₂ und Fe in einem Molverhältnis von 2 : 1 werden innerhalb eines 60 ml-Tiegels mit drei Stahlkugeln (zwei mit 1,27 cm und einer mit 1,429 cm) angeordnet. Das Pulver wurde einer intensiven mechanischen Pulverisierung in einer hochenergetischen Kugelmahlmaschine des Typs SPEX 8000 (SPEX ist eine eingetragene Marke) unterworfen. Die Mahlung wurde unter Argonatmosphäre ausgeführt, und zwar 60 Stunden lang. Die in Fig. 1 dargestellte Röntgenstrahlbeugung des erhaltenen Mg₂FeH₆-Pulvers zeigt das synthetisierte Hydrid gemäß Beispiel 1. Das Ergebnis wurde bestätigt durch eine Untersuchung mit einem Differential-Scanning-Kalorimeter DSC unter Wasserstoff. Die Röntgenstrahlbeugung des Pulvers gemäß Beispiel 1 zeigte eine Kristallgröße des Mg₂FeH₆ von 22 nm.

### Beispiel 2 (Vergleichsbeispiel)

### Synthetisierung von Na₃AlH₆

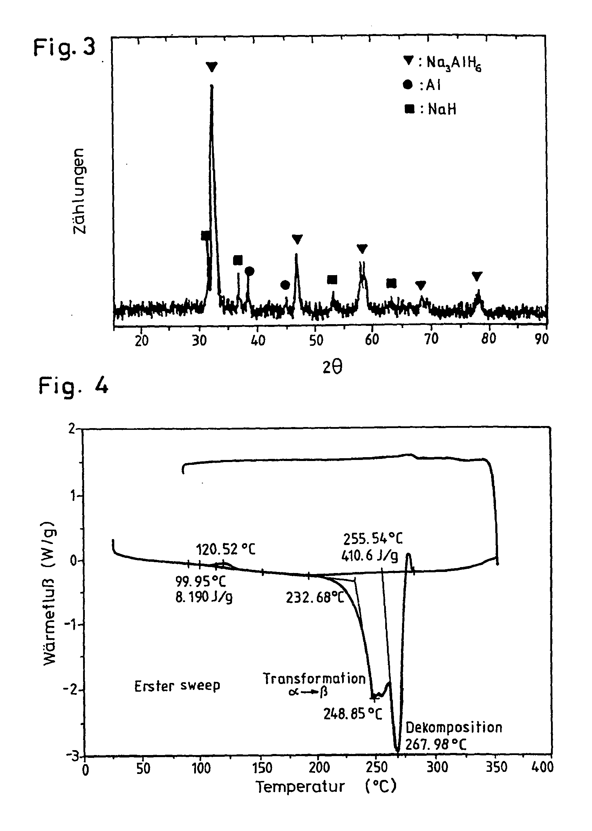

Experimentelle Einzelheiten: 3 g von NaH und NaAlH₄ in einem Molverhältnis von 2 wurden in einen 60 ml-Tiegel zusammen mit 3 Stahlkugeln (zwei mit 1,27 cm und einer mit 1,429 cm) gegeben. Das Pulver wurde einer intensiven mechanischen Pulverisierung in einer hochenergetischen Mahlmaschine des Typs SPEX 8000 unterworfen. Das Mahlen wurde unter einer Argonatmosphäre 20 Stunden lang ausgeführt. Die Röntgenstrahlbeugung des in Fig. 3 dargestellten Pulvers zeigt die Formation von Na₃AlH₆ gemäß Beispiel 2. Dieses Ergebnis wurde bestätigt durch Überprüfung mit einem Differential-Scanning-Kalorimeter DSC unter Wasserstoff, vergleiche Fig. 4.

### Beispiel 3 (Vergleichsbeispiel)

### Synthese von Na₂AlLiH₆

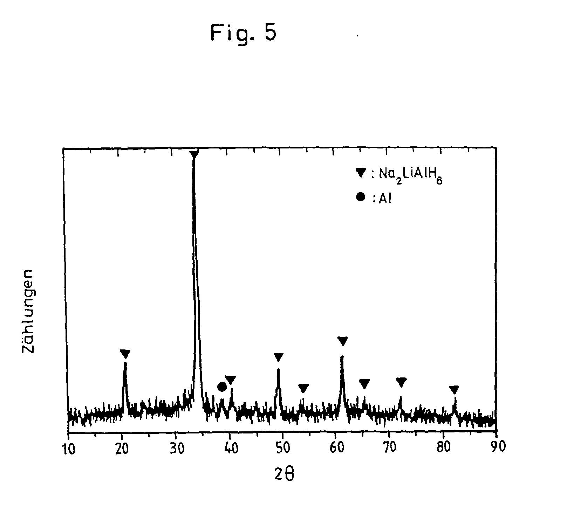

Experimentelle Einzelheiten: 3 g von NaH, LiH und NaAlH₄ in einem Molverhältnis von 1 : 1 : 1 wurden in einen 60 ml-Tiegel mit 3 Stahlkugeln (zwei mit 1,27 cm und einer mit 1,429 cm) gegeben. Die Pulver wurde einer intensiven mechanischen Mahlung in einer hochenergetischen Kugelmahlmaschine des Typs SPEX 8000 unterworfen. Das Mahlen wurde unter einer Argonatmosphäre über eine Zeit von 40 Stunden ausgeführt. Die in Fig. 5 dargestellte Röntgenstrahlbeugung des Pulvers zeigt die Formation des Na₂AlLiH₆-Hydrids.

### Beispiel 4:

### Synthese von Mg₂NiH₄

Experimentelle Einzelheiten: MgH₂-Pulver und elementares Ni-Pulver wurden in einem Molverhältnis von 2 : 1 gemischt. 40 g dieses Pulvergemisches wurden in einer Planetkugelmühle (Typ Fritsch P5) gemahlen, und zwar bei 230 Umdrehungen/min, wobei ein gehärteter Chromstahlbecher (mit einem Volumen von 250 ml) und Kugeln. (mit einem Durchmesser von 10 mm) benutzt wurden. Ein Kugel zu Pulver-Gewichtsverhältnis von 10 : 1 wurde ausgewählt. Die Mahlexperimente wurden bei einer Argonatmosphäre bis zu 200 Stunden ausgeführt.

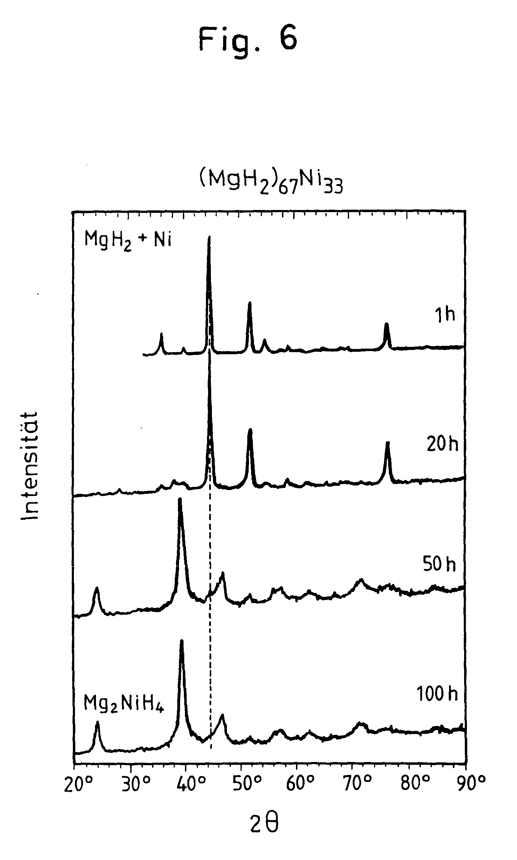

Fig. 6 zeigt die Röntgenstrahlbeugung des Pulvers, das nach unterschiedlichen Mahlzeiten erhalten wurde. Die Bragg'schen Reflexionen des Ausgangsmaterials nehmen kontinuierlich mit der Zunahme der Mahlzeit ab, was durch die gestrichelte Linie dargestellt ist. Die Formation der Mg₂NiH₄-Hydridphase wird schon nach 20 Stunden des Mahlens erkennbar. Die Reaktion ist nach 50 Stunden abgeschlossen, wobei der Aufbau des erhaltenen Hydrids auch bei weiterem Mahlen unverändert bleibt.

### Beispiel 5:

### Synthetisierung eines Mg₂NiH₄/MgH₂ (Mg₈₃Ni₁₇)-Gemisches unter Verwendung von MgH₂

Experimentelle Einzelheiten: MgH₂-Pulver und elementares Ni-Pulver werden in einem Molverhältnis 5 : 1 gemischt. 40 g dieser Pulvermischung wurde in einer Planetkugelmühle (Typ Fritsch P5) bei 230 Umdrehungen/min gemahlen, wobei eine gehärtete Chromstahlphiole (mit einem Volumen von 250 ml) und Kugeln (mit einem Durchmesser von 10 mm) verwendet wurden. Als Kugel zu Pulver-Gewichtsverhältnis wurde 10 : 1 ausgewählt. Die Mahlexperimente wurden in einer Argonatmosphäre über eine Zeit von bis zu 200 Stunden ausgeführt.

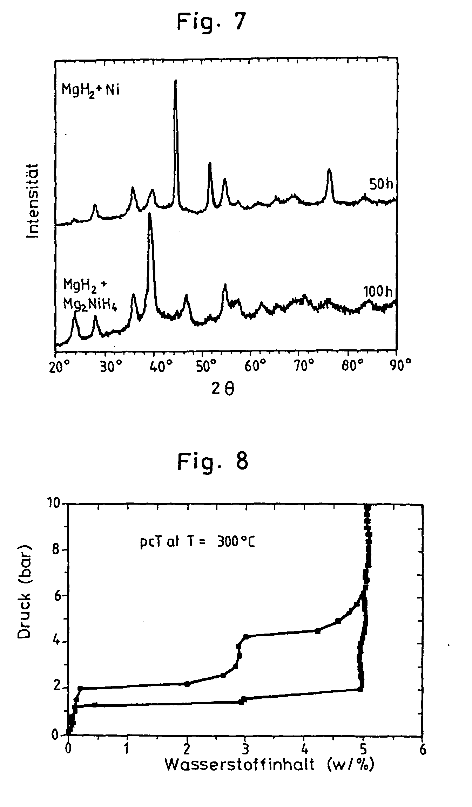

Fig. 7 zeigt die Röntgenstrahlbeugung des Pulvers nach unterschiedlichen Mahldauern. Die Bragg'schen Reflexionen der Ausgangsmaterialien nehmen ab mit zunehmender Mahldauer. Nach 100 Stunden des Mahlens sind die Ni-Peaks verschwunden und das Mg₂NiH₄-Hydrid ist ausgebildet. Auf diese Weise ist ein Mg₂NiH₄/MgH₂-Zweiphasenkomposit erzeugt worden. Der Aufbau des zweiphasigen Komposithydrids verbleibt auch nach weiterem Mahlen unverändert.

Fig. 8 zeigt das PCT (Pressure-Concentration-Temperature) -Diagramm des Komposits. Die beiden Druckplateaus, die sich auf die Bildung des Mg₂NiH₄ und MgH₂ beziehen, können klar unterschieden bzw. auseinandergehalten werden. Die Gesamtwasserstoffkapazität des Komposits beträgt 5 wt.%.

### Beispiel 6:

### Synthese von Mg₂NiH_{0,3}//Mg₂Ni-Komposit unter Verwendung von 10 mol% MgH₂ und 90 mol% Mg

Experimentelle Einzelheiten: Mg-Pulver und MgH₂ werden in einem Molverhältnis von 9 : 1 gemischt. Danach wird dieses Gemisch mit elementarem Ni-Pulver in einem Molverhältnis von 2 : 1 gemischt. 40 g dieses Pulvergemisches wird in einer Planetkugelmühle (des Typs Fritsch P5) bei 230 Umdrehungen/min gemahlen, wobei eine gehärtete Chromstahlphiole (mit einem Volumen von 250 ml) und Kugeln (mit einem Durchmesser von 10 mm) verwendet wurden. Ein Kugel zu Pulver-Gewichtsverhältnis von 10 : 1 wurde ausgewählt. Die Mahlexperimente wurden in einer Argonatmosphäre bis zu 200 Stunden ausgeführt.

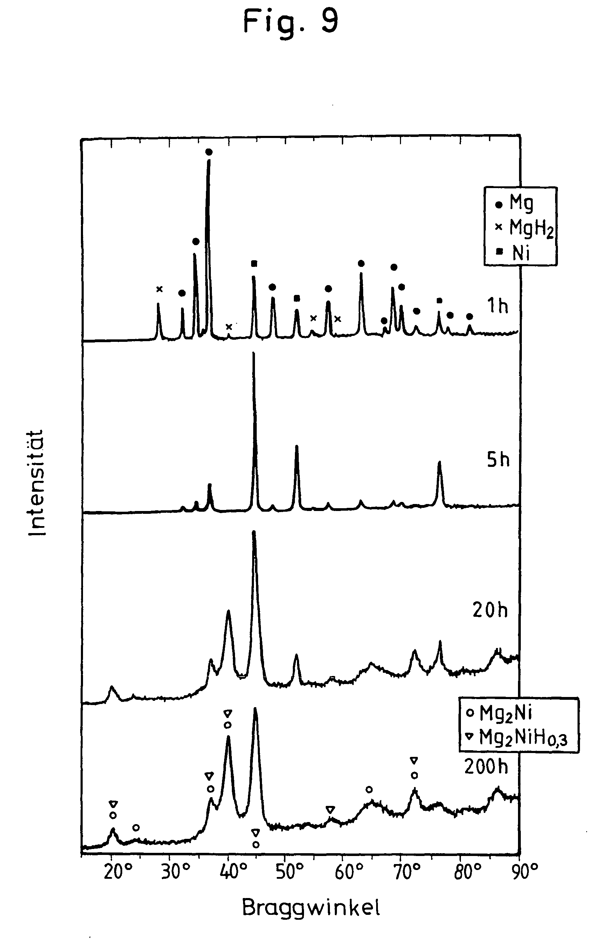

Fig. 9 zeigt eine Röntgenstrahlbeugung des Hydrids bei unterschiedlichen Mahlzeiten. Die Bragg'schen Reflexionen des MgH₂ sind nach lediglich 5 Mahlstunden nahezu verschwunden. Nach einer Mahlzeit von 20 Stunden haben sich die Ni-Peaks ebenso signifikant vermindert und neue Phasen gebildet. Schließlich sind keine Ni-Beugungspeaks mehr ersichtlich nach 200 Mahlstunden und ein Mg₂NiH_{0,3}/Mg₂Ni zweiphasiges Komposit wird erhalten.

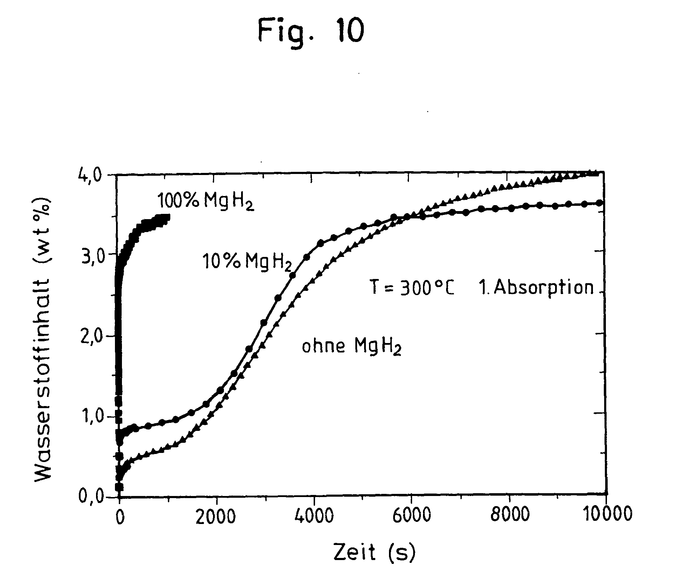

Die kinetischen Eigenschaften der in den Beispielen 4 und 6 während des ersten Absorptionszyklusses (nach der anfänglichen Desorption) beschriebenen Materialien werden mit den Eigenschaften von M₉₂Ni verglichen, die aus den reinen Materialien, vergleiche Fig. 10, hergestellt worden sind. Während das Mg₂NiH_{0,3}/Mg₂Ni-Zweiphasengemisch lediglich eine minimale Verbesserung im Hinblick auf das Material darstellt, das ohne MgH₂ gemahlen worden ist, ist das Mg₂NiH₄, das mit 100 % MgH₂ gemahlen worden ist, klar das bessere und absorbiert Wasserstoff bis zu 80 % der Gesamtkapazität innerhalb von 20 Sekunden.

## Patentansprüche

1. Verfahren zur Herstellung nanokristalliner Metallhydride, wobei mindestens ein elementares Metallhydrid mit wenigstens einem elementaren Metall zur Schaffung eines Legierungshydrids einem mechanischen Mahlvorgang unter einer Inertgasatmosphäre unterworfen wird, wobei das mindestens eine elementare Metallhydrid und das Metall dem Mahlvorgang in pulverförmiger Form zugeführt werden.

2. Verfahren nach Anspruch 1, **dadurch gekennzeichnet, dass** die Zeit des Mahlvorganges im Bereich von 20 bis 200 Stunden liegt.

3. Verfahren nach einem der vorhergehenden Ansprüche, **dadurch gekennzeichnet, dass** das Inertgas Argon ist.

4. Verfahren nach einem der vorhergehenden Ansprüche, **dadurch gekennzeichnet, dass** das elementare Metallhydrid aus Metallen der I. oder III. Hauptgruppe des Periodensystems der Elemente besteht.

5. Verfahren nach einem der vorhergehenden Ansprüche, **dadurch gekennzeichnet, dass** das elementare Metall aus Elementen der VIII. Nebengruppe des Periodensystems der Elemente besteht.

6. Verfahren nach einem der vorhergehenden Ansprüche, **dadurch gekennzeichnet, dass** ein weiteres Metallhydrid aus einem Gemisch der Elementen der I. und III. Hauptgruppe des Periodensystems der Elemente besteht.

## Claims

1. A process for manufacturing nanocrystalline metal hydrides, wherein at least one elemental metal hydride is subjected to a mechanical milling process together with at least one elemental metal under an inter gas atmosphere for the production of an alloy hydride, whereby the at least one elemental metal hydride and the metal are supplied to the milling process in the form of a powder.

2. Process according to claim 1, **characterized in that** the duration of the milling process is in the region of from 20 to 200 hours.

3. Process according to any of the preceding claims, **characterized in that** the inert gas is argon.

4. Process according to any of the preceding claims, **characterized in that** the elemental metal hydride consists of metals of the I. or III. main group of the periodic system of the elements.

5. Process according to any of the preceding claims, **characterized in that** the elemental metal consists of elements of the VIII. sub-group of the periodic system of the elements.

6. Process according to any of the preceding claims, **characterized in that** a further metal hydride consists of a mixture of elements of the I. and III. main group of the periodic system of the elements.

## Revendications

1. Procédé pour produire des hydrures métalliques nanocristallins où au moins un hydrure métallique élémentaire est soumis à un processus de broyage mécanique sous une atmosphère de gaz inerte avec au moins un métal élémentaire pour créer un hydrure d'alliage, où le au moins un hydrure métallique élémentaire et le métal sont envoyés au processus de broyage sous forme pulvérulente.

2. Procédé selon la revendication 1 **caractérisé en ce que** la durée du processus de broyage est située dans la plage de 20 à 200 heures.

3. Procédé selon l'une des revendications précédentes **caractérisé en ce que** le gaz inerte est l'argon.

4. Procédé selon l'une des revendications précédentes **caractérisé en ce que** l'hydrure métallique élémentaire consiste en métaux du Ier ou IIIème groupe principal du système périodique des éléments.

5. Procédé selon l'une des revendications précédentes **caractérisé en ce que** le métal élémentaire consiste en éléments du VIIIème sous-groupe du système périodique des éléments.

6. Procédé selon l'une des revendications précédentes **caractérisé en ce qu'**un autre hydrure métallique consiste en un mélange des éléments du Ier et IIIème groupe principal du système périodique des éléments.
